(19) Europäisches Patentamt / European Patent Office / Office européen des brevets

(11) **EP 3 652 501 B1**

(12) **FASCICULE DE BREVET EUROPEEN**

(45) Date de publication et mention de la délivrance du brevet:
**08.06.2022 Bulletin 2022/23**

(21) Numéro de dépôt: **18758922.1**

(22) Date de dépôt: **13.07.2018**

(51) Classification Internationale des Brevets (IPC):
***G01C 21/16*** *(2006.01)*

(52) Classification Coopérative des Brevets (CPC):
**G01C 21/165**

(86) Numéro de dépôt international:
**PCT/FR2018/051783**

(87) Numéro de publication internationale:
**WO 2019/012239 (17.01.2019 Gazette 2019/03)**

(54) **PROCÉDÉ D'ESTIMATION DU MOUVEMENT D'UN OBJET ÉVOLUANT DANS UN CHAMP MAGNÉTIQUE**

VERFAHREN ZUR SCHÄTZUNG DER BEWEGUNG EINES SICH IN EINEM MAGNETFELD BEWEGENDEN OBJEKTS

METHOD FOR ESTIMATING THE MOVEMENT OF AN OBJECT MOVING IN A MAGNETIC FIELD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.07.2017 FR 1756675**

(43) Date de publication de la demande:
**20.05.2020 Bulletin 2020/21**

(73) Titulaire: **SYSNAV**
**27200 Vernon (FR)**

(72) Inventeurs:
• **VISSIERE, David**
 **75009 Paris (FR)**
• **HILLION, Mathieu**
 **27200 Vernon (FR)**

(74) Mandataire: **Regimbeau**
**20, rue de Chazelles**
**75847 Paris Cedex 17 (FR)**

(56) Documents cités:
**EP-A1- 2 541 199     US-A1- 2017 074 660**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE TECHNIQUE GENERAL

La présente invention concerne le domaine de la navigation sans GPS.
Plus précisément, elle concerne un procédé d'estimation du mouvement d'un objet par des techniques magnéto-inertielles.

ETAT DE L'ART

Les techniques dites de navigation magnéto-inertielles permettent d'estimer précisément la vitesse (et de là la position par intégration) d'un solide dans un lieu où le champ magnétique est perturbé.
Précisément, il a été proposé dans le brevet FR2914739 d'utiliser, en complément des équations déjà utilisées en techniques inertielles classiques, l'équation $\dot{B} = -\Omega \wedge B + \nabla B.V$ pour estimer le vecteur vitesse (linéaire) $V$, à partir du vecteur vitesse angulaire $\Omega$ (généralement mesuré par des gyromètres de la centrale inertielle), des mesures de champ magnétique $B$ et de ses dérivées par rapport au temps $\dot{B}$ et de ses dérivées spatiales $\nabla B$ (gradient), mesurées ou estimées.
Dans le brevet EP 2 541 199, il est proposé d'utiliser un gyromètre pour mesurer un vecteur vitesse instantanée de rotation d'un engin par rapport au référentiel inertiel, des magnétomètres pour mesurer, dans un référentiel lié à l'engin, un vecteur champ magnétique produit par un astre et stationnaire dans un référentiel lié à l'astre ainsi qu'une base de données dans laquelle est mémorisé un vecteur de vitesse de rotation de l'astre par rapport au référentiel inertiel. Le vecteur vitesse est estimé par résolution d'une équation reliant le vecteur vitesse au vecteur vitesse instantanée de rotation, au vecteur champ magnétique, à la dérivée temporelle et au gradient spatial du vecteur champ magnétique, au vecteur position de l'engin spatial par rapport au centre du référentiel inertiel estimé à l'aide d'une donnée de mesures reçues par le calculateur et au vecteur vitesse de rotation du référentiel lié à l'astre par rapport au référentiel inertiel.
Grâce à cette information sur la vitesse du solide, l'erreur sur l'estimation de position sera dans le pire des cas proportionnelle au temps, contrairement aux techniques inertielles classiques où elle est quadratique en temps.
Ces techniques magnéto-inertielles apportent ainsi entière satisfaction, et requièrent des capteurs inertiels de moindre performance que les méthodes inertielles classiques (basées sur l'intégration au travers d'un filtre de Kalman ou d'un autre observateur d'informations en provenance de gyromètres et d'accéléromètres embarqués sur le solide dont on souhaite estimer la position et la vitesse : typiquement, les gyromètres « maintiennent » un repère, dans lequel une double intégration temporelle des mesures des accéléromètres permet d'estimer le mouvement) et donc moins encombrants.
Ainsi, au moins une centrale inertielle est couplée à un ou plusieurs magnétomètres répartis spatialement (typiquement magnétomètres disposés sur les sommets d'un trièdre direct) et solidaire de la centrale inertielle (typiquement placée à l'origine du trièdre). Les données issues de ces capteurs sont transmises à une carte électronique d'acquisition et de calcul qui délivre à l'utilisateur l'information de position et de vitesse par résolution de l'équation susmentionnée. L'utilisation de plusieurs magnétomètres permet de mesurer directement les gradients de champ magnétique par exemple par différence finie (développement de Taylor), au lieu de les estimer.
On constate cependant que dans l'équation de navigation magnéto-inertielle, l'information sur la vitesse est faible dans les directions (dites faibles) associées aux valeurs propres faibles (voire nulle) du gradient.
De plus, cette équation n'a que trois composantes, ce qui fait qu'elle n'apporte que trois contraintes sur les vitesses (angulaires $\Omega$ et linéaire $V$).
Il serait souhaitable de disposer d'une nouvelle méthode de navigation magnéto-inertielle par mesure du gradient du champ magnétique qui offre une plus grande précision dans toutes les directions, et qui améliore encore les performances.

PRESENTATION DE L'INVENTION

La présente invention se rapporte ainsi selon un premier aspect à un procédé d'estimation du mouvement d'un objet évoluant dans un champ magnétique ambiant, le procédé étant caractérisé en ce qu'il comprend des étapes de :

    (a) Acquisition par des moyens de mesure magnétique solidaires dudit objet d'au moins une composante :

        ◦ du champ magnétique et/ou
        ◦ d'au moins une dérivée i-ième du champ magnétique, avec $n + 1 \geq i \geq 1$, $n \geq 1$,
        au niveau des moyens de mesure magnétique ;

(b) Estimation par les moyens de traitement de données d'au moins une composante du mouvement dudit objet en utilisant l'équation $\overset{\cdot}{\nabla_n}B = f_n(\Omega).\nabla_n B + g_n(\nabla_{n+1}B).V$, où $\nabla_n B$ est une dérivée n-ième du champ magnétique, $\Omega$ la vitesse angulaire instantanée, $V$ la vitesse linéaire instantanée, et $f_n$ et $g_n$ des fonctions prédéterminées.

Selon d'autres caractéristiques avantageuses et non limitatives :

- les moyens de mesure magnétique comprennent au moins un gradiomètre, de sorte que l'étape (a) comprend l'acquisition par chaque gradiomètre solidaire dudit objet d'une composante d'au moins une dérivée i-ième du champ magnétique au niveau du gradiomètre ;
- les moyens de mesure magnétique comprennent au moins un magnétomètre, de sorte que l'étape (a) comprend l'acquisition par ledit magnétomètre solidaire dudit objet d'une composante du champ magnétique au niveau du magnétomètre ;
- les moyens de mesure magnétique ne comprennent que des gradiomètres ou que des magnétomètres ;
- les moyens de mesure magnétique sont constitués d'une pluralité de gradiomètres ou magnétomètres organisés en triaxes, chaque triaxe étant associé à une position spatiale.
- $i$ = n, de sorte que de sorte que l'étape (a) comprend l'acquisition par chaque gradiomètre solidaire dudit objet d'une composante de la dérivée n-ième du champ magnétique au niveau du gradiomètre ;
- au moins $4n+8$ composantes de la dérivée n-ième du champ magnétique sont acquises à l'étape (a), et $3^{n+1}$ composantes de l'équation $\overset{\cdot}{\nabla_{\mathrm{n}}}B = f_n(\Omega).\nabla_{\mathrm{n}}B + g_n(\nabla_{\mathrm{n+1}}B).V$ sont utilisées à l'étape (b).
- $n$ = 1;
- est également utilisée à l'étape (b) au moins une composante d'au moins une équation supplémentaire $\overset{\cdot}{\nabla_{\mathrm{k}}}B = f_k(\Omega).\nabla_{\mathrm{k}}B + g_k(\nabla_{\mathrm{k+1}}B).V$, avec $k \in [\![0\,;\,n-1]\!]$ ;
- $k$ = 0, $f_0$ = $skew$, $g_0$ = $id$, de sorte que l'équation supplémentaire est $\dot{B}$ = -$\Omega \times B + \nabla B \cdot V$ ;
- l'étape (a) comprend en outre l'acquisition par des moyens de mesure inertielle solidaires dudit objet d'au moins une composante de la vitesse angulaire $\Omega$ ;
- au moins $(n+2)(n+4)$ composantes du champ magnétique et/ou d'au moins une dérivée i-ième du champ magnétique sont acquises à l'étape (a), et $3^{n+1}$ composantes de l'équation $\overset{\cdot}{\nabla_{\mathrm{n}}}B = f_n(\Omega).\nabla_{\mathrm{n}}B + g_n(\nabla_{\mathrm{n+1}}B).V$ sont utilisées à l'étape (b);
- au moins une relation entre des composantes de l'équation $\overset{\cdot}{\nabla_{\mathrm{n}}}B = f_n(\Omega).\nabla_n B + g_n(\nabla_{\mathrm{n+1}}B).V$ est déterminée à l'étape (c) par application de la version locale d'au moins une équation de Maxwell sur les composantes de la dérivée n-ième du champ magnétique $\nabla_n B$.

Selon un deuxième aspect, l'invention concerne un équipement d'estimation du mouvement d'un objet évoluant dans un champ magnétique ambiant, caractérisé en ce qu'il comprend des moyens de traitement de données configurés pour mettre en œuvre :

- Un module de réception d'au moins une composante :

  ∘ du champ magnétique et/ou
  ∘ d'au moins une dérivée i-ième du champ magnétique, avec $n + 1 \geq i \geq 1$, $n \geq 1$,
  acquis par des moyens de mesure magnétique solidaires dudit objet ;

- Un module d'estimation d'au moins une composante du mouvement dudit objet en utilisant l'équation $\overset{\cdot}{\nabla_{\mathrm{n}}}B = f_n(\Omega).\nabla_n B + g_n(\nabla_{n+1}B).V$, où $\nabla_n B$ est une dérivée n-ième du champ magnétique, $\Omega$ la vitesse angulaire instantanée, $V$ la vitesse linéaire instantanée, et $f_n$ et $g_n$ des fonctions prédéterminées.

Selon d'autres caractéristiques avantageuses et non limitatives :

- L'équipement est un boitier comprenant les moyens de mesure magnétique ;
- L'équipement est un terminal mobile ou un serveur, adapté pour communiquer avec un boitier comprenant les moyens de mesure magnétique.

Selon un troisième aspect, l'invention concerne un système comprenant l'équipement selon le deuxième aspect de l'invention et au moins un boitier en connexion.

Selon un quatrième et un cinquième aspect, l'invention concerne un produit programme d'ordinateur comprenant des instructions de code pour l'exécution d'un procédé d'estimation du mouvement d'un objet évoluant dans un champ magnétique ambiant selon le premier aspect de l'invention ; et un moyen de stockage lisible par un équipement informatique sur lequel un produit programme d'ordinateur comprend des instructions de code pour l'exécution d'un procédé d'estimation du mouvement d'un objet évoluant dans un champ magnétique ambiant selon le premier aspect de l'invention.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 est un schéma d'équipements pour la mise en œuvre du procédé selon l'invention ;
- La figure 2 représente plus en détail un exemple de boitier pour la mise en oeuvre du procédé selon l'invention.

DESCRIPTION DETAILLEE

*Principe*

Le présent procédé propose de travailler non pas sur les variations spatiales et temporelles du champ magnétique évaluées grâce aux mesures de magnétomètres, mais sur les variations spatiales et temporelles des gradients magnétiques (i.e. les variations spatiales du champ magnétique) évaluées en particulier grâce aux mesures de gradiomètres.

En d'autres termes, on considère une équation généralisée de la forme

$$\dot{\nabla}_n B = f_n(\Omega).\nabla_n B + g_n(\nabla_{n+1} B).V$$

, avec $\nabla_n B$ le gradient spatial d'ordre $n \geq 1$ écrit sous la forme d'un vecteur (on comprend que si $n = 0$ alors $\nabla_0 B = B$ et on revient à l'équation connue $\dot{B} = -\Omega \wedge B + \nabla B.V$, et si $n = 1$, $\nabla_1 B$ est le gradient classique). $f_n$ et $g_n$ sont alors des fonctions matricielles prédéterminées qui ne dépendent que de $n$ et des hypothèses prises sur les gradients (voir ci-après).

On note que $\nabla_n B$ et donc l'équation généralisée a $3^{n+1}$ composantes, et ainsi amène un plus grand nombre de contraintes sur les vitesses (angulaires $\Omega$ et linéaire $V$), en pratique $2n + 3$ au vu des propriétés du champ magnétique (équations de Maxwell), voir plus loin.

De plus, ces composantes supplémentaires permettent d'apporter de l'information dans les directions dites faibles correspondant aux valeurs propres faibles (voire nulle) du gradient.

De façon avantageuse, est également considérée au moins une (et de façon préférée chaque) autre équation de la forme $\dot{\nabla}_k B = f_k(\Omega).\nabla_k B + g_k(\nabla_{k+1} B).V$, avec une ou plusieurs valeurs de $k \in [\![0 ; n-1]\!]$ (par exemple $k$ peut être égal à zéro, ce qui signifie qu'on peut également considérer l'équation d'origine $\dot{B} = -\Omega \wedge B + \nabla B.V$).

On note que l'on peut travailler avec un gradient représenté dans le référentiel terrestre ou dans le référentiel lié à l'objet 1 dont on estime le mouvement, et le cas échéant, la fonction g comprend des produits de $\nabla_{k+1} B$ par $R$ et $R^T$ (i.e. $R(\nabla_{k+1} B)R^T$), où $R$ est la matrice de passage du référentiel terrestre au référentiel lié à l'objet 1,

Par ailleurs, dans la suite de la présente description, on détaillera plus précisément l'exemple préféré où $n = 1$.

De façon encore plus préférée, on utilisera $n = 1$ et un unique $k = 0$, i.e. le système de deux équations :

$$\begin{cases} \dot{\nabla} B = f_1(\Omega).\nabla B + g_1(\nabla_2 B).V \\ \dot{B} = f_0(\Omega).B + g_0(\nabla B).V = -\Omega \wedge B + \nabla B.V \end{cases}$$

Les fonctions $f_n$ et $g_n$ peuvent être calculées par l'homme du métier en dérivant itérativement l'équation $\dot{B} = -\Omega \wedge B + \nabla B.V$. On voit que si $n = 0$, on a

$$f_0\left(\Omega = \begin{pmatrix} p \\ q \\ r \end{pmatrix}\right) = skew(\Omega) = \begin{bmatrix} 0 & -r & q \\ r & 0 & -p \\ -q & p & 0 \end{bmatrix}$$ et

$$g_0 = id = \begin{bmatrix} 1 & 0 & 0 \\ 0 & 1 & 0 \\ 0 & 0 & 1 \end{bmatrix}$$ . « skew » est la fonction qui détermine la matrice antisymétrique associée au produit vectoriel par un vecteur. Les fonctions $f_n$ et $g_n$ seront par exemple explicitées plus loin pour $n = 1$.

*Architecture*

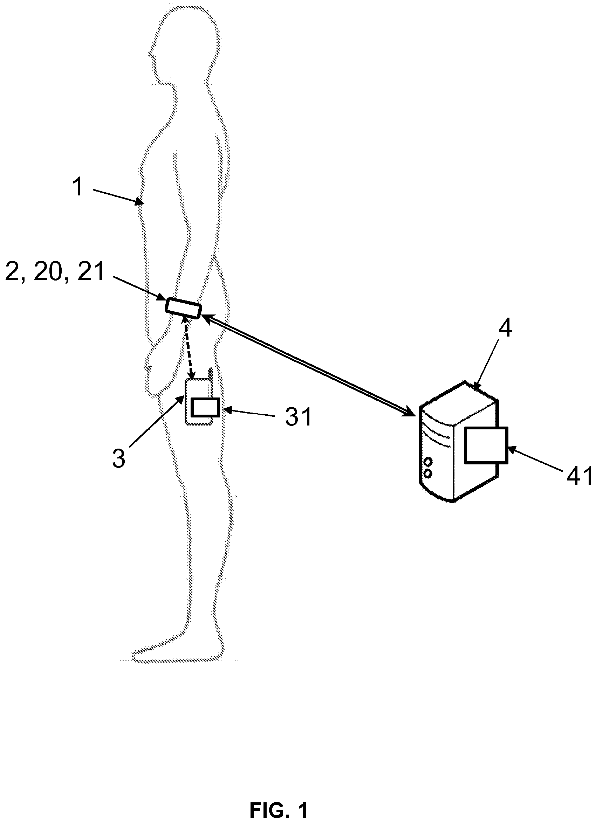

En référence à la **figure 1**, le présent procédé permet l'estimation du mouvement d'un objet 1 évoluant dans un champ magnétique ambiant (typiquement le champ magnétique terrestre, le cas échéant légèrement altéré par les objets métalliques ou des courants électriques à proximité), noté $\vec{B}$. Comme déjà expliqué, le champ magnétique est un champ vectoriel en l'espèce tridimensionnel, c'est-à-dire associant un vecteur de dimension trois à chaque point de tridimensionnel dans lequel l'objet est mobile.

Cet objet 1 peut être n'importe quel objet mobile dont la connaissance de la position est souhaitée, par exemple un véhicule à roues, un drone, etc., mais également une personne ou une partie du corps de cette personne (ses mains, sa tête, etc.).

L'objet 1 est équipé de moyens de mesure magnétiques 20, mais préférentiellement ces derniers ne sont pas des magnétomètres mais des gradiomètres magnétiques comme expliqué. Plus précisément, au lieu de mesurer la valeur des composantes du champ magnétique $\vec{B}$ ces derniers mesurent directement la valeur des composantes du gradient du champ magnétique $\vec{B}$, i.e. la valeur des dérivées spatiales. De tels gradiomètres magnétiques 20 sont connus de l'homme du métier. Selon certains modes de réalisation de l'invention, on pourra utiliser des gradiomètres mesurant directement la valeur des dérivées secondes (gradient d'ordre deux), et de façon générale des dérivées i-ièmes (gradient d'ordre $i$), $n + 1 \geq i \geq 1$. Avantageusement, $i = n$, c'est-à-dire que sont directement mesurées les dérivées spatiales de tous les termes des équations utilisées, mais on comprendra que l'invention n'est pas limitée à ce mode de réalisation, en particulier si plusieurs équations avec $k < n$ sont considérées. A noter qu'on peut avoir $i = n + 1$, c'est-à-dire qu'on mesure directement des composantes de $\nabla_{n+1}B$. Dans la suite de la présente description, on prendra l'exemple où $i \in \{n; n + 1\}$, et donc on considérera des gradiomètres plutôt que des magnétomètres, mais l'homme du métier saura transposer.

On comprendra néanmoins que le présent procédé peut utiliser toute combinaison de magnétomètres et/ou de gradiomètres : soit il n'utilise que des valeurs « simple » du champ magnétique à partir desquelles les valeurs des dérivées sont recalculées, ce qui signifie que les moyens de mesure magnétiques ne sont que des magnétomètres (i.e. virtuellement $i = 0$) ; soit il n'utilise aucune valeur « simple » du champ magnétique (et uniquement des dérivées à un ou plusieurs ordres donnés), ce qui signifie qu'aucun magnétomètre standard n'est requis ; soit il utilise également les valeurs du champ magnétique (et non plus uniquement des dérivées), et le système peut comprendre à la fois des gradiomètres et des magnétomètres standards.

Les gradiomètres 20 sont solidaires de l'objet 1, i.e. ils présentent un mouvement sensiblement identique dans le référentiel terrestre. De façon préférée, le référentiel de l'objet 1 est muni d'un repère cartésien orthonormé dans lequel les coordonnées sont notées $(x_1, x_2, x_3)$, les gradiomètres 20 présentent ainsi une position prédéterminée dans ce repère.

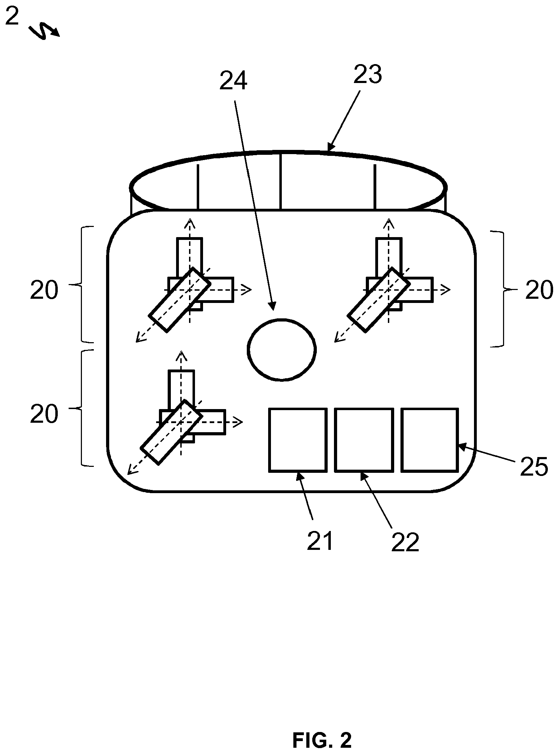

Les gradiomètres 20 sont préférentiellement ceux d'un boitier 2 tel que représenté sur la **figure 2** présentant (par exemple si l'objet 1 est une personne) des moyens 23 d'attache à l'objet 1 (par exemple le poignet ou la main). Ces moyens d'attache 23 consistent par exemple en un bracelet par exemple à bande auto-agrippante qui enserre le membre et permet la liaison solidaire. On comprendra bien que l'invention n'est pas limitée à l'estimation du mouvement d'une personne, mais elle est particulièrement avantageuse dans une telle utilisation car elle permet un encombrement très réduit, ce qui est nécessaire pour que le boitier soit portable par un humain de façon ergonomique.

Le ou les gradiomètres 20 sont « axiaux », c'est à dire capables de mesurer une composante d'une dérivée spatiale d'ordre $i$ dudit champ magnétique, i.e. la variation d'une composante de $\nabla_{i-1}B$ au niveau dudit gradiomètres 20 selon leur axe (ou en cas de magnétomètres, i.e. $i=0$, une composante dudit champ magnétique, i.e. la projection dudit vecteur champ magnétique $\vec{B}$ selon leur axe).

Comme expliqué avant $\nabla_i B$ présente $3^{(i+1)}$ composantes, mais il n'est pas nécessaire d'acquérir toutes ces composantes et $2i+3$ suffisent, comme l'on verra plus loin.

Avantageusement les gradiomètres 20 d'ordre i sont ainsi au moins au nombre de $3i+3$, de sorte à pouvoir avantageusement les organiser par groupes de trois en « triaxes », i.e. un triplet de gradiomètres 20 deux à deux orthogonaux associés à la même position spatiale et mesurant la variation selon les trois axes d'une même composante de $\nabla_{i-1}B$, de sorte à pouvoir déterminer toutes les composantes de $\nabla_i B$.

Les composantes de $\nabla_{i+1}B$ peuvent ensuite si nécessaire se déterminer en acquérant les composantes de $\nabla_i B$ en plusieurs positions spatiales et en calculant les variations spatiales, et ainsi de suite. $2i+3+2(i+1)+3=4i+8$ gradiomètres 20 d'ordre i suffisent pour calculer toutes les composantes de $\nabla_{i+1}B$, *6i+13* gradiomètres 20 d'ordre i suffisent pour calculer toutes les composantes de $\nabla_{i+2}B$, etc. (voir plus loin).

De façon préférée, le repère orthonormé associé à l'objet est choisi par convention (et par facilité pour la suite de la présente description) tel que les triaxes sont avantageusement orientés conformément audit repère orthonormé, de sorte à faciliter encore les calculs.

Mais l'homme du métier saura dans tous les cas transposer à n'importe quelle disposition spatiale de gradiomètres/magnétomètres.

Dans le cas préféré où *n* = 1 et *k* = 0, et on considère le système de deux équations

$$\begin{cases} \dot{\nabla B} = f_1(\Omega).\nabla B + g_1(\nabla_2 B).V \\ \dot{B} = -\Omega \wedge B + \nabla\text{B}.V \end{cases}$$

, alors on utilise de façon très avantageuse un seul triplet de magnétomètres (*i* = 0) et le reste en gradiomètres mesurant le gradient spatial au premier ou deuxième ordre ($i \in \{1;2\}$), de sorte à pouvoir déterminer facilement toutes les composantes des deux équations.

Le boitier 2 peut comprendre des moyens de traitement 21 (typiquement un processeur) pour la mise en oeuvre directement en temps réel des traitements du présent procédé, ou bien les mesures peuvent être émises via des moyens de communication 25 vers un dispositif externe tel qu'un terminal mobile (smartphone) 3, voire un serveur distant 4, ou encore les mesures peuvent être enregistrées dans des moyens de stockage de données 22 locaux (une mémoire par exemple de type flash) mémoire locale pour un traitement a posteriori par exemple sur le serveur 4.

Les moyens de communication 25 peuvent mettre en oeuvre une communication sans fil à courte portée par exemple Bluetooth ou Wifi (en particulier dans un mode de réalisation avec un terminal mobile 3) voire être des moyens de connexion à un réseau mobile (typiquement UMTS/LTE) pour une communication à longue distance. Il est à noter que les moyens de communication 25 peuvent être par exemple une connectique filaire (typiquement USB) pour transférer les données des moyens de stockage de données 22 locaux à ceux d'un terminal mobile 3 ou d'un serveur 4.

Si c'est un terminal mobile 3 (respectivement un serveur 4) qui héberge « l'intelligence », il comprend des moyens de traitement 31 (respectivement 41) tels qu'un processeur pour la mise en oeuvre des traitements du présent procédé qui vont être décrits. Lorsque les moyens de traitement utilisés sont ceux 21 du boitier 2, celui-ci peut encore inclure des moyens de communication 25 pour transmettre la position estimée. Par exemple la position du porteur peut être envoyée au terminal mobile 3 pour afficher la position dans une interface d'un logiciel de navigation.

Dans la suite de la présente description, on verra que les moyens de traitement de données 21, 31, 41 respectivement du boitier 2, d'un smartphone 3 et d'un serveur distant 4 peuvent indifféremment et selon les applications réaliser tout ou partie des étapes du procédé.

*Procédé*

Dans une première étape (a), le procédé comprend l'acquisition (en particulier dans un référentiel de l'objet 1) par le ou les gradiomètres/magnétomètres 20 solidaires dudit objet 1, d'au moins une composante :

- du champ magnétique et/ou

- d'au moins une dérivée i-ième dudit champ magnétique $\vec{B}$, avec une ou plusieurs valeurs $i \in \llbracket 1 ; n + 1 \rrbracket$.

Comme expliqué, divers gradiomètres/magnétomètres peuvent être utilisés de sorte à mesurer divers ordres des dérivées ou directement les valeurs du champ magnétique.

L'étape (a) peut également comprendre l'acquisition par les moyens de mesure inertielle 24 d'au moins une composante de la vitesse angulaire $\Omega$, voire par d'autres moyens de mesure d'au moins une composante de la vitesse linéaire V.

Ces grandeurs sont avantageusement mesurées avec un échantillonnage dt (i.e. toutes les « dt » secondes) avec dt très petit devant le temps caractéristique des mouvements de l'objet 1, typiquement 40 ms.

Comme l'on verra plus loin, le nombre minimal de composantes du champ magnétique et/ou d'au moins une dérivée i-ième du champ magnétique à acquérir pour garantir un système entièrement déterminé est *4n+8* (en l'espèce *4n+8* composantes de la dérivée n-ième du champ magnétique, ou alternativement *2n+3* composantes de la dérivée n-ième du champ magnétique et *2n+5* composantes de la dérivée n+1-ième du champ magnétique), correspondant au nombre de composantes indépendantes de $\nabla_n B$ *(2n+3)* et $\nabla_{n+1}B$ *(2(n+1)+3)*.

De façon générale, le nombre minimal de composantes de la dérivée i-ième (et/ou d'une dérivée d'ordre supérieur) du champ magnétique à acquérir pour garantir un système entièrement déterminé est donnée par la formule $\sum_{p=i}^{n+1}(2p + 3)$, c'est-à-dire (*n* - *i* + 2)(*n* + *i* + 4), car il est nécessaire de déterminer toutes les composantes indépendantes de $\nabla_i B$ puis $\nabla_{i+1}B$, ... $\nabla_{n+1}B$. Dans le cas extrême *i=0* (on a au moins 3 magnétomètres, voire uniquement des magnétomètres), ce nombre est $(n+2)(n+4)$. En d'autres termes, $(n+2)(n+4)$ acquisitions de composantes du champ magnétique et/ou d'au moins une dérivée i-ième du champ magnétique (i.e. de composantes magnétiques à n'importe quel ordre) garantit dans un système entièrement déterminé.

On note qu'avec ce dernier nombre $(n+2)(n+4)$ d'acquisitions de composantes magnétiques, toutes les équations de la forme $\nabla_k^{\cdot}B = f_k(\Omega).\nabla_k B + g_k(\nabla_{k+1}B).V$, i.e. $\forall k \in [\![\,[\![0\,;\,n-1]\!]\,]\!]$, y compris l'équation d'origine $B = -\Omega \wedge B + \nabla B.V$, peuvent être entièrement déterminées.

On notera qu'il est cependant tout à fait possible que moins de composantes, voire même une seule, soient acquises, si suffisamment de composantes de vitesse sont par ailleurs acquises.

Il est même possible que le système soit sous-déterminé si on prend une seule mesure (i.e. une occurrence de l'étape (a), correspondant à un seul pas de temps), tout en restant déterminé si on prend un ensemble de mesures correspondant à un intervalle temporel. Toute la théorie des observateurs dynamiques repose sur ce principe, c'est la notion d'observabilité. Il y a même des outils simples en linéaire (critère de Kalman) qui permettent de savoir si un système est observable ou non, i.e. si avec un ensemble Y de mesures partielles d'un état X (Y = CX), on peut remonter à l'état sachant qu'il vérifie une équation différentielle du type dX/dt=A.X.

Dans une étape (b), les moyens de traitement de données 21, 31, 41 estiment au moins une composante du mouvement de l'objet 1, en particulier toutes les composantes de la vitesse linéaire $V$. Une ou plusieurs composantes du vecteur vitesse angulaire $\Omega$ peuvent être également estimées ou du tout du moins vérifiées (ce qui est également possible pour d'éventuelles composantes acquises de la vitesse linéaire $V$) si suffisamment de composantes de ladite équation $\nabla_n^{\cdot}B = f_n(\Omega).\nabla_n B + g_n(\nabla_{n+1}B).V$ sont disponibles.

Pour cela, on utilisera comme expliqué, en complément des équations déjà utilisées en techniques inertielles classiques et éventuellement l'équation connue $\dot{B} = -\Omega \times B + \nabla B \cdot V,$ l'équation $\nabla_n^{\cdot}B = f_n(\Omega).\nabla_n B + g_n(\nabla_{n+1}B).V$ pour estimer le vecteur vitesse V, à partir des valeurs de dérivée d'ordre n de champ magnétique $\nabla_n B$ (soit directement mesurées, soit calculées à partir de valeurs mesurées de dérivées d'ordre $i$ inférieur) et de ses dérivées par rapport au temps $\nabla_n^{\cdot}B$ et de son gradient $\nabla_{n+1}B$ (dont les composantes sont soit également directement mesurées ($i = n + 1$), soit calculées à partir de valeurs mesurées de dérivées d'ordre $i$ inférieur).

On note que $\nabla_n^{\cdot}B$ s'obtient facilement à partir des valeurs de $\nabla_n B$ connaissant le pas de temps entre deux mesures. Alternativement, on utilise les techniques de filtrage/estimation type Kalman ou observateurs qui permettent de se passer de cette dérivation.

Bien que $\nabla_n B$ présente comme expliqué $3^{n+1}$ composantes qui sont avantageusement toutes utilisées à l'étape (b), en pratique seules *2n+3* composantes sont indépendantes.

L'idée astucieuse est d'appliquer la version locale d'au moins une équation de Maxwell de sorte à déterminer au moins une relation entre les composantes du gradient d'ordre n $\nabla_n B$, avantageusement au moins la version locale de l'équation de Maxwell-Thomson et avantageusement également la version locale de l'équation de Maxwell-Ampère. Le champ magnétique est ainsi à rotationnel nul et/ou à divergence nulle.

L'homme du métier pourra consulter à cet effet la demande FR1653493.

*Exemple si n=1*

On pose $BYx = \frac{\partial By}{\partial x}$ la dérivée par rapport à x de la composante *y* du champ magnétique. On peut écrire toutes les autres dérivées premières en suivant la même logique.

On pose $BYxz = \frac{\partial}{\partial z}\frac{\partial By}{\partial x}$ la dérivée par rapport à *z* de la dérivée par rapport à *x* de la composante *y* du champ magnétique. On peut écrire toutes les autres dérivées secondes en suivant la même logique.

Alors, on obtient le modèle suivant (toutes les équations sont écrites dans le repère de l'objet 1):

$$\frac{d}{dt}(BXx) = rBYx + rBXy - qBZx - qBXz + BXxxu + BXxyv + BXxzw$$

$$\frac{d}{dt}(BXy) = rBYy - rBXx - qBZy + pBXz + BXyxu + BXyyv + BXyzw$$

$$\frac{d}{dt}(BXz) = +rBYz + qBXx - qBZz - pBXy + BXzxu + BXzyv + BXzzw$$

$$\frac{d}{dt}(BYx) = -rBXx + pBZx + rBYy - qBYz + BYxxu + BYxyv + BYxzw$$

$$\frac{d}{dt}(BYy) = -rBXy + pBYz - rBYx + pBZy + BYyx\,u + BYyyv + BYyzw$$

$$\frac{d}{dt}(BYz) = -rBXz + pBZz - pBYy + qBYx + BYzxu + BYzyv + BYzzw$$

$$\frac{d}{dt}(BZx) = +qBXx - pBYx + rBZy + qBZz + BZxxu + BZxyv + BZxzw$$

$$\frac{d}{dt}(BZy) = +qBXy - pBYy - rBZx + pBZz + BZyxu + BZyyv + BZyzw$$

$$\frac{d}{dt}(BZz) = +qBXz - pBYz + qBZx - pBZy + BZzxu + BZzyv + BZyzw$$

$$\Omega = \begin{pmatrix} p \\ q \\ r \end{pmatrix} \qquad\qquad V = \begin{pmatrix} u \\ v \\ w \end{pmatrix}$$

Où $\Omega = \begin{pmatrix} p \\ q \\ r \end{pmatrix}$ est la vitesse angulaire de l'objet et $V = \begin{pmatrix} u \\ v \\ w \end{pmatrix}$ est sa vitesse linéaire.

Les différents coefficients sur chacun des termes de ces équations définissent les matrices permettant d'exprimer $f_1$ et $g_1$.

$$\text{Par exemple, } f_1(\Omega) = \begin{bmatrix} 0 & r & -q & r & 0 & 0 & -q & 0 & 0 \\ -r & 0 & p & 0 & r & 0 & 0 & -q & 0 \\ q & -p & 0 & 0 & 0 & r & 0 & 0 & -q \\ -r & 0 & 0 & 0 & r & -q & p & 0 & 0 \\ 0 & -r & 0 & -r & 0 & -p & 0 & p & 0 \\ 0 & 0 & -r & q & -p & 0 & 0 & 0 & -p \\ q & 0 & 0 & -p & 0 & 0 & 0 & r & -q \\ 0 & q & 0 & 0 & -p & 0 & -r & 0 & p \\ 0 & 0 & q & 0 & 0 & -p & q & -p & 0 \end{bmatrix}$$

On voit donc qu'on a neuf composantes de l'équation $\dot{\nabla B} = f_1(\Omega).\nabla B + g_1(\nabla_2 B).V$, qu'on peut utiliser de manière indépendante pour lier les composantes de $\Omega$ et de $V$, soit six de plus qu'avec l'équation $\dot{B} = -\Omega \wedge B + \nabla B.V$ seule.

Comme expliqué précédemment, le nombre de composantes indépendantes du gradient ($\nabla B$) peut être réduit de 9 jusqu'à 5 en fonction des hypothèses et de la hessienne ($\nabla_2 B$) de 27 jusqu'à 7 selon les hypothèses, c'est-à-dire que l'acquisition de 12 composantes de dérivée première ou 15 composantes du champ magnétique suffit.

Pour revenir à l'exemple ci-avant, dans le cas où on considère que le champ magnétique est à divergence et rotationnel nul, on n'a que 5 composantes indépendantes pour le gradient à mesurer (on choisit les 5 ci-dessous) et 7 pour la Hessienne (on choisit BXxx, BXxy, Bxxz, Bxyy, Bxyz, Byyy, Byyz), alors on obtient les équations simplifiées suivantes (les termes entre crochets sont calculés via les relations div $\vec{B}$ = 0 et $\overrightarrow{rot}\,\vec{B} = \vec{0}$), les autres termes sont identiques au système à 9 composantes.

$$\frac{d}{dt}(BXx) = r[BXy] + rBXy - q[BXz] - qBXz + BXxxu + BXxyv + BXxzw$$

$$\frac{d}{dt}(BXy) = rBYy - rBXx - q[BYz] + pBXz + [BXxy]u + BXyyv + BXyzw$$

$$\frac{d}{dt}(BXz) = +rBYz + qBXx - q[-BXx - BYy] - pBXy + [BXxz]u + [BXyz]v$$
$$+ [-BXyy - BXxx]w$$

$$\frac{d}{dt}(BYy) = -rBXy + pBYz - r[BXy] + p[BYz] + [BXyy]u + BYyyv + BYyzw$$

$$\frac{d}{dt}(BYz) = -rBXz + p[-BXx - BYy] - pBYy + q[BXy] + [BXyz]u + [BYyz]v$$
$$+ [-BXxy - BYyy]w$$

*Equipements et système*

Selon un deuxième aspect, l'invention concerne en particulier les équipements 2, 3, 4 pour la mise en oeuvre de l'un ou l'autre des modes de réalisation du procédé.

Comme expliqué précédemment, selon un premier mode de réalisation l'équipement est un boitier 2 autonome comprenant les magnétomètres/gradiomètres 20 et les moyens de traitement de données 21 configurés pour la mise en oeuvre des étapes du procédé.

Le boitier 2 comprend en outre des moyens d'attache 23 du boitier 2, et le cas échéant des moyens de mesure inertielle 24 additionnels, des moyens de stockage de données 22 (pour le stockage par exemple des mouvements estimés) et/ou des moyens de communication 25 pour l'exportation des résultats.

Selon un deuxième mode de réalisation, l'équipement est un terminal mobile 3 ou un serveur 4, adapté pour communiquer avec un boitier 2 comprenant les moyens de mesure inertielle 24. En d'autres termes, le terminal 3 ou le serveur 4 comprend les moyens de traitement 31 ou 41 configurés pour la mise en oeuvre des étapes du procédé. Chaque boitier 2 peut tout de même comprendre des moyens de traitement de données 21 pour le contrôle des moyens 20, 24 et la transmission (via des moyens de communication 25) des données mesurées aux moyens de traitement de données 31, 41.

Il est à noter que les moyens 21, 31, 41 peuvent le cas échéant se partager des étapes du procédé.

L'invention concerne dans ce cas également le système comprenant l'équipement 3, 4 selon ce mode de réalisation et le ou les boitiers 2 « satellites » en connexion.

Dans tous les cas, les moyens de traitement de données 21, 31, 41 de l'équipement 2, 3, 4 « principal » sont configurés pour mettre en œuvre :

- Un module de réception d'au moins une (en particulier au moins *2n+3*) composante :

  ○ du champ magnétique (si n=0) et/ou
  ○ d'au moins une dérivée i-ième du champ magnétique, avec $n + 1 \geq i \geq 1$ et $n \geq 1$,

acquis par des moyens de mesure magnétique 20 solidaires dudit objet 1 ;

- Un module d'estimation d'au moins une composante du mouvement dudit objet 1 en utilisant l'équation $\dot{\nabla}_n B = f_n(\Omega).\nabla_n B + g_n(\nabla_{n+1} B).V$, où $\nabla_n B$ est une dérivée n-ième du champ magnétique, $\Omega$ la vitesse angulaire instantanée, $V$ la vitesse linéaire instantanée, et $f$ et $g$ des fonctions prédéterminées (ainsi qu'éventuellement une ou plusieurs équations $\dot{\nabla}_k B = f_k(\Omega).\nabla_k B + g_k(\nabla_{k+1} B).V, k \in [\![ 0; n-1 ]\!]$, et des équations inertielles classiques).

*Produit programme d'ordinateur*

Selon un troisième et un quatrième aspects, l'invention concerne un produit programme d'ordinateur comprenant des instructions de code pour l'exécution (sur les moyens de traitement 21, 31, 41) d'un procédé d'estimation du mouvement d'un objet 1 évoluant dans un champ magnétique ambiant selon le premier aspect de l'invention, ainsi que des moyens de stockage lisibles par un équipement informatique (par exemple des moyens de stockage de données 22) sur lequel on trouve ce produit programme d'ordinateur.

**Revendications**

1.  Procédé d'estimation du mouvement d'un objet (1) évoluant dans un champ magnétique ambiant, le procédé comprenant une étape de :

    (a) Acquisition par des moyens de mesure magnétique (20) solidaires dudit objet (1) d'au moins une composante :

    ◦ du champ magnétique et/ou
    ◦ d'au moins une dérivée i-ième du champ magnétique, avec $n + 1 \geq i \geq 1$ et $n \geq 1$,

    au niveau des moyens de mesure magnétique (20) ;

    **caractérisé en ce qu'**il comprend une étape de :
    (b) Estimation par les moyens de traitement de données (21, 31, 41) d'au moins une composante du mouvement dudit objet (1) en utilisant l'équation $\dot{\nabla}_n B = f_n(\Omega).\nabla_n B + g_n(\nabla_{n+1} B).V$, où $\nabla_n B$ est une dérivée n-ième du champ magnétique, $\Omega$ la vitesse angulaire instantanée, $V$ la vitesse linéaire instantanée, et $f_n$ et $g_n$ des fonctions prédéterminées.

2.  Procédé selon la revendication 1, dans lequel les moyens de mesure magnétique (20) comprennent au moins un gradiomètre, de sorte que l'étape (a) comprend l'acquisition par chaque gradiomètre solidaire dudit objet (1) d'une composante d'au moins une dérivée i-ième du champ magnétique au niveau du gradiomètre.

3.  Procédé selon l'une des revendications 1 et 2, dans lequel les moyens de mesure magnétique (20) comprennent au moins un magnétomètre, de sorte que l'étape (a) comprend l'acquisition par ledit magnétomètre solidaire dudit objet (1) d'une composante du champ magnétique au niveau du magnétomètre.

4.  Procédé selon l'une des revendications 2 ou 3, dans lequel les moyens de mesure magnétique (20) ne comprennent que des gradiomètres ou que des magnétomètres.

5.  Procédé selon l'une des revendications 2 à 4, dans lequel les moyens de mesure magnétique (20) sont constitués d'une pluralité de gradiomètres ou magnétomètres organisés en triaxes, chaque triaxe étant associé à une position spatiale.

6.  Procédé selon l'une des revendications 2 à 5, dans lequel $i \in \{n; n + 1\}$, de sorte que de sorte que l'étape (a) comprend l'acquisition par chaque gradiomètre solidaire dudit objet (1) d'une composante de la dérivée n-ième du champ magnétique au niveau du gradiomètre.

7.  Procédé selon la revendication 6, dans lequel au moins *4n+8* composantes de la dérivée n-ième du champ magnétique sont acquises à l'étape (a), et $3^{n+1}$ composantes de l'équation $\overset{.}{\nabla}_{\mathrm{n}} B = f_n(\Omega).\nabla_{\mathrm{n}} B + g_n(\nabla_{\mathrm{n}+1} B).V$ sont utilisées à l'étape (b).

8. Procédé selon l'une des revendications 1 à 7, dans lequel au moins *(n+2)(n+4)* composantes du champ magnétique et/ou d'au moins une dérivée i-ème du champ magnétique sont acquises à l'étape (a), et $3^{n+1}$ composantes de l'équation $\overset{.}{\nabla}_{\mathrm{n}} B = f_n(\Omega).\nabla_{\mathrm{n}} B + g_n(\nabla_{\mathrm{n}+1} B).V$ sont utilisées à l'étape (b).

9. Procédé selon l'une des revendication 7 et 8, dans lequel au moins une relation entre des composantes de l'équation $\overset{.}{\nabla}_{\mathrm{n}} B = f_n(\Omega).\nabla_{\mathrm{n}} B + g_n(\nabla_{\mathrm{n}+1} B).V$ est déterminée à l'étape (b) par application de la version locale d'au moins une équation de Maxwell sur les composantes de la dérivée n-ième du champ magnétique $\nabla_{\mathrm{n}} B$.

10. Procédé selon l'une des revendications 1 à 9, dans lequel $n$ = 1.

11. Procédé selon l'une des revendications 1 à 10, dans lequel est également utilisée à l'étape (b) au moins une équation supplémentaire $\overset{.}{\nabla}_{\mathrm{k}} B = f_k(\Omega).\nabla_{\mathrm{k}} B + g_n(\nabla_{\mathrm{k}+1} B).V$, avec $k \in [\![ 0; n-1 ]\!]$.

12. Procédé selon la revendication 11, dans lequel $k$ = 0, $f_0$ = *skew*, $g_0$ = *id* de sorte que l'équation supplémentaire *est* $\dot{B}$ = -$\Omega \times B + VB \cdot V$.

13. Procédé selon l'une des revendications 1 à 12, dans lequel l'étape (a) comprend en outre l'acquisition par des moyens de mesure inertielle (24) solidaires dudit objet (1) d'au moins une composante de la vitesse angulaire $\Omega$.

14. Equipement (2, 3, 4) d'estimation du mouvement d'un objet (1) évoluant dans un champ magnétique ambiant, comprenant des moyens de traitement de données (21, 31, 41) configurés pour mettre en oeuvre :

   - la réception d'au moins une composante :

      ◦ du champ magnétique et/ou
      ◦ d'au moins une dérivée i-ème du champ magnétique, avec $n + 1 \geq i \geq 1$ et $n \geq 1$,

   acquise par des moyens de mesure magnétique (20) solidaires dudit objet (1) ;

   **caractérisé en ce que** les moyens de traitement de données (21, 31, 41) sont en outre configurés pour mettre en œuvre

   - l'estimation d'au moins une composante du mouvement dudit objet (1) en utilisant l'équation $\overset{.}{\nabla}_{\mathrm{n}} B = f_n(\Omega).\nabla_{\mathrm{n}} B + g_n(\nabla_{\mathrm{n}+1} B).V$, où $\nabla_{\mathrm{n}} B$ est une dérivée n-ième du champ magnétique, $\Omega$ la vitesse angulaire instantanée, $V$ la vitesse linéaire instantanée, *et* $f_n$ et $g_n$ des fonctions prédéterminées.

15. Produit programme d'ordinateur comprenant des instructions de code pour l'exécution d'un procédé d'estimation du mouvement d'un objet (1) évoluant dans un champ magnétique ambiant selon l'une des revendications 1 à 13, lorsque ledit programme est exécuté sur un ordinateur.

16. Moyen de stockage lisible par un équipement informatique sur lequel un produit programme d'ordinateur comprend des instructions de code pour l'exécution d'un procédé d'estimation du mouvement d'un objet (1) évoluant dans un champ magnétique ambiant selon l'une des revendications 1 à 13.

**Patentansprüche**

1. Verfahren zur Schätzung der Bewegung eines Objekts (1), das sich in einem Umgebungsmagnetfeld bewegt, wobei das Verfahren einen Schritt umfasst, der:

(a) Erfassung, durch magnetische Messmittel (20), die fest mit dem Objekt (1) verbunden sind, von mindestens einer Komponente:

  ◦ des Magnetfeldes und/oder
  ◦ der mindestens einen i-ten Ableitung des Magnetfeldes, mit $n + 1 \geq i \geq 1$ und $n \geq 1$,

im Bereich der magnetischen Messmittel (20);

**dadurch gekennzeichnet, dass** es einen Schritt umfasst, der:
(b) Schätzung durch die Datenverarbeitungsmittel (21, 31, 41) mindestens einer Komponente der Bewegung des Objekts (1) unter Verwendung der Gleichung $\dot{\nabla_n}B = f_n(\Omega).\nabla_n B + g_n(\nabla_{n+1}B).V$ , wobei $\nabla_n B$ eine n-te Ableitung des Magnetfeldes ist, $\Omega$ die momentane Winkelgeschwindigkeit ist, $V$ die momentane Lineargeschwindigkeit ist, und $f_n$ und $g_n$ vorbestimmte Funktionen sind.

2. Verfahren nach Anspruch 1, wobei die magnetischen Messmittel (20) mindestens ein Gradiometer umfassen, so dass der Schritt (a) die Erfassung einer Komponente von mindestens einer i-ten Ableitung des Magnetfeldes im Bereich des Gradiometers umfasst, durch jedes Gradiometer, das fest mit dem Objekt (1) verbunden ist.

3. Verfahren nach einem der Ansprüche 1 und 2, wobei die magnetischen Messmittel (20) mindestens ein Magnetometer umfassen, so dass der Schritt (a) die Erfassung einer Komponente des Magnetfeldes im Bereich des Magnetometers umfasst, durch das Magnetometer, das fest mit dem Objekt (1) verbunden ist.

4. Verfahren nach einem der Ansprüche 2 oder 3, wobei die magnetischen Messmittel (20) nur Gradiometer oder Magnetometer umfassen.

5. Verfahren nach einem der Ansprüche 2 bis 4, wobei die magnetischen Messmittel (20) aus einer Vielzahl von Gradiometern oder Magnetometern bestehen, die in Triaxen angeordnet sind, wobei jeder Triaxe eine räumliche Position zugeordnet ist.

6. Verfahren nach einem der Ansprüche 2 bis 5, wobei $i \in \{n; n + 1\}$, so dass der Schritt (a) die Erfassung einer Komponente der n-ten Ableitung des Magnetfeldes im Bereich des Gradiometers umfasst, durch jedes Gradiometer, das fest mit dem Objekt (1) verbunden ist.

7. Verfahren nach Anspruch 6, wobei mindestens *4n+8* Komponenten der n-ten Ableitung des Magnetfeldes in Schritt (a) erfasst werden und $3^{n+1}$ Komponenten der Gleichung $\dot{\nabla_n}B = f_n(\Omega).\nabla_n B + g_n(\nabla_{n+1}B).V$ in Schritt (b) verwendet werden.

8. Verfahren nach einem der Ansprüche 1 bis 7, wobei mindestens *(n+2)(n+4)* Komponenten des Magnetfeldes und/oder mindestens eine i-te Ableitung des Magnetfeldes in Schritt (a) erfasst wird und $3^{n+1}$ Komponenten der Gleichung $\dot{\nabla_n}B = f_n(\Omega).\nabla_n B + g_n(\nabla_{n+1}B).V$ in Schritt (b) verwendet werden.

9. Verfahren nach einem der Ansprüche 7 und 8, wobei mindestens eine Beziehung zwischen Komponenten der Gleichung $\dot{\nabla_n}B = f_n(\Omega).\nabla_n B + g_n(\nabla_{n+1}B).V$ in Schritt (b) bestimmt wird, durch Anwendung der lokalen Version von mindestens einer Maxwell-Gleichung auf die Komponenten der n-ten Ableitung des Magnetfeldes $\nabla_n B$.

10. Verfahren nach einem der Ansprüche 1 bis 9, wobei $n = 1$.

11. Verfahren nach einem der Ansprüche 1 bis 10 , wobei auch in Schritt (b) mindestens eine zusätzliche Gleichung $\dot{\nabla_k}B = f_k(\Omega).\nabla_k B + g_n(\nabla_{k+1}B).V$ , mit $k \in [\![ [\![ 0; n - 1 ]\!] ]\!]$ verwendet wird.

12. Verfahren nach Anspruch 11, wobei $k = 0$, $f_0 = skew$, $g_0 = id$, so dass die zusätzliche Gleichung $B = -\Omega \times B + \nabla B \bullet V$ ist.

**13.** Verfahren nach einem der Ansprüche 1 bis 12, wobei der Schritt (a) ferner die Erfassung von mindestens einer Komponente der Winkelgeschwindigkeit Ω umfasst, durch Trägheitsmessmittel (24), die fest mit dem Objekt (1) verbunden sind.

**14.** Apparatur (2, 3, 4) zur Schätzung der Bewegung eines Objekts (1), das sich in einem Umgebungsmagnetfeld bewegt, Datenverarbeitungsmittel (21, 31, 41) umfassend, die konfiguriert sind, um durchzuführen:

- den Empfang von mindestens einer Komponente:

  ∘ des Magnetfeldes und/oder
  ∘ der mindestens einen i-ten Ableitung des Magnetfeldes mit $n + 1 \geq i \geq 1$ und $n \geq 1$,

erfasst durch magnetische Messmittel (20), die fest mit dem Objekt (1) verbunden sind;

**dadurch gekennzeichnet, dass** die Datenverarbeitungsmittel (21, 31, 41) ferner konfiguriert sind, um durchzuführen:

- die Schätzung mindestens einer Komponente der Bewegung des Objekts (1) unter Verwendung der Gleichung

$$\dot{\nabla}_n B = f_n(\Omega).\nabla_n B + g_n(\nabla_{n+1} B).V$$ , wobei $\nabla_n B$ eine n-te Ableitung des Magnetfeldes ist, Ω die momentane Winkelgeschwindigkeit ist, $V$ die momentane Lineargeschwindigkeit ist, und $f_n$ und $g_n$ vorbestimmte Funktionen sind.

**15.** Computerprogrammprodukt, Codeanweisungen umfassend zur Durchführung eines Verfahrens zur Schätzung der Bewegung eines Objekts (1), das sich in einem Umgebungsmagnetfeld bewegt, nach einem der Ansprüche 1 bis 13, wenn das Programm auf einem Computer ausgeführt wird.

**16.** Speichermittel, durch eine Computerausrüstung lesbar, auf der ein Computerprogrammprodukt Codeanweisungen umfasst zur Durchführung eines Verfahrens zur Schätzung der Bewegung eines Objekts (1), das sich in einem Umgebungsmagnetfeld bewegt, nach einem der Ansprüche 1 bis 13.

**Claims**

**1.** Method for estimating the movement of an object (1) moving in an ambient magnetic field, the method being **characterised in that** it comprises the steps of:

(a) Acquiring by magnetic measurement means (20) integral with said object (1) at least one component:

  ∘ of the magnetic field and/or
  ∘ of at least one i-th derivative of the magnetic field, with $n + 1 \geq i \geq 1$ and $n \geq 1$,

at the magnetic measurement means (20);

**characterised in that** it comprises a step of:
(b) Estimating by the data processing means (21, 31, 41) at least one component of the movement of said object (1) using the equation $\dot{\nabla}_n B = f_n(\Omega).\nabla_n B + g_n(\nabla_{n+1} B).V$, where $\nabla_n B$ is an n-th derivative of the magnetic field, Ω the instantaneous angular velocity, $V$ the instantaneous linear velocity, and $f_n$ and $g_n$ predetermined functions.

**2.** Method according to claim 1, in which the magnetic measurement means (20) comprise at least one gradiometer, such that step (a) comprises the acquisition by each gradiometer integral with said object (1) of a component of at least one i-th derivative of the magnetic field at the gradiometer.

**3.** Method according to one of claims 1 and 2, in which the magnetic measurement means (20) comprise at least one magnetometer, such that step (a) comprises the acquisition by said magnetometer integral with said object (1) of a component of the magnetic field at the magnetometer.

4. Method according to one of claims 2 or 3, in which the magnetic measurement means (20) only comprise gradiometers or only magnetometers.

5. Method according to one of claims 2 to 4, in which the magnetic measurement means (20) are constituted of a plurality of gradiometers or magnetometers organised into triaxes, each triaxis being associated with a spatial position.

6. Method according to one of claims 2 to 5, in which $i \in \{n; n + 1\}$, such that step (a) comprises the acquisition by each gradiometer integral with said object (1) of a component of the n-th derivative of the magnetic field at the gradiometer.

7. Method according to claim 6, in which at least *4n+8* components of the n-th derivative of the magnetic field are acquired at step (a), and $3^{n+1}$ components of the equation $\dot{\nabla}_{n}B = f_n(\Omega).\nabla_{n}B + g_n(\nabla_{n+1}B).V$ are used at step (b).

8. Method according to one of claims 1 to 7, in which at least *(n+2)(n+4)* components of the magnetic field and/or at least one i-th derivative of the magnetic field are acquired at step (a), and $3^{n+1}$ components of the equation $\dot{\nabla}_{n}B = f_n(\Omega).\nabla_{n}B + g_n(\nabla_{n+1}B).V$ are used at step (b).

9. Method according to one of claims 7 and 8, in which at least one relationship between components of the equation $\dot{\nabla}_{n}B = f_n(\Omega).\nabla_{n}B + g_n(\nabla_{n+1}B).V$ is determined at step (b) by application of the local version of at least one Maxwell equation to the components of the n-th derivative of the magnetic field $\nabla_{n}B$.

10. Method according to one of claims 1 to 9, in which $n = 1$.

11. Method according to one of claims 1 to 10, in which is also used at step (b) at least one component of at least one supplementary equation $\dot{\nabla}_{k}B = f_k(\Omega).\nabla_{k}B + g_n(\nabla_{k+1}B).V$ , with $k \in [\![ [\![ 0; n-1 ]\!] ]\!]$ .

12. Method according to claim 11, in which $k = 0$, $f_0 = skew$, $g_0 = id$ such that the supplementary equation is $B = -\Omega \times B + \nabla B \cdot V$.

13. Method according to one of claims 1 to 12, in which step (a) further comprises the acquisition by inertial measurement means (24) integral with said object (1) at least one component of the angular velocity $\Omega$.

14. Equipment (2, 3, 4) for estimating the movement of an object (1) moving in an ambient magnetic field, **characterised in that** it comprises data processing means (21, 31, 41) configured to implement:

    - the reception of at least one component:

        ◦ of the magnetic field and/or
        ◦ of at least one i-th derivative of the magnetic field, with $n + 1 \geq i \geq 1$ and $n \geq 1$,

    acquired by magnetic measurement means (20) integral with said object (1);

    **characterised in that** the data processing means (21, 31, 41) are further configured to implement

    - the estimation of at least one component of the movement of said object (1) using the equation $\dot{\nabla}_{n}B = f_n(\Omega).\nabla_{n}B + g_n(\nabla_{n+1}B).V$ , where $\nabla_{n}B$ is an n-th derivative of the magnetic field, $\Omega$ the instantaneous angular velocity, $V$ the instantaneous linear velocity, and $f_n$ and $g_n$ predetermined functions.

15. Computer programme product comprising code instructions for the execution of a method for estimating the movement of an object (1) moving in an ambient magnetic field according to one of claims 1 to 13, when said programme is executed on a computer.

16. Storage means readable by a computer equipment on which a computer programme product comprises code instructions for the execution of a method for estimating the movement of an object (1) moving in an ambient magnetic field according to one of claims 1 to 13.

**FIG. 1**

2

24    23

20                        20

20

25

21    22

FIG. 2

**EP 3 652 501 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2914739
- EP 2541199 A
- FR 1653493